# EUROPÄISCHE PATENTSCHRIFT

(11) **EP 2 613 901 B1**
(45) Veröffentlichungstag und Bekanntmachung des Hinweises auf die Patenterteilung: **06.03.2019**
(21) Anmeldenummer: 11763844.5
(22) Anmeldetag: 08.09.2011
(51) Int. Cl.: B23B 29/20

(54) **FESTLEGEVORRICHTUNG**
FASTENING DEVICE
DISPOSITIF DE FIXATION

(30) Priorität: 10.09.2010 DE 102010044968
(43) Veröffentlichungstag der Anmeldung: 17.07.2013
(73) Patentinhaber: Sauter Feinmechanik GmbH, 72555 Metzingen (DE)
(72) Erfinder: BECK, Matthias, 72555 Metzingen (DE); SCHIPS, Günther, 72793 Pfullingen (DE)
(74) Vertreter: Bartels und Partner, Patentanwälte
(86) Internationale Anmeldenummer: PCT/EP2011/004520
(87) Internationale Veröffentlichungsnummer: WO 2012/031758

(56) Entgegenhaltungen:
- EP-A1- 0 780 179
- DE-A1-102008 048 206
- DE-A1-102009 033 805
- DE-U1-202010 004 617

## Beschreibung

Die Erfindung bezieht sich auf eine Festlegevorrichtung zum lösbaren Festlegen mindestens einer Funktionskomponente, insbesondere in Form eines Werkzeughalters, an einer weiteren Funktionskomponente, insbesondere in Form einer Werkzeugscheibe, um mindestens eine Festlegeachse mit den Merkmalen im Oberbegriff von Anspruch 1.

Werkzeugscheiben werden in der industriellen Fertigung bei sogenannten Werkzeugrevolvern von Werkzeugmaschinen eingesetzt. Sind mehrere Werkzeughalter mit zugehörigen Werkzeugen (beispielsweise feststehende Drehmeißel oder antreibbare Fräswerkzeuge) über den Umfang der Werkzeugscheibe angebracht, so erlaubt eine solche Anordnung durch Drehen einen sehr schnellen Wechsel der für die jeweilige Bearbeitung erforderlichen Werkzeuge. Da bei der Bearbeitung von Werkstücken regelmäßig nur sehr geringe Fertigungstoleranzen zugelassen sind, ist es für einen sinnvollen Einsatz derartiger Werkzeugrevolver unerlässlich, dass der betreffende Werkzeughalter und damit das jeweilige Werkzeug bezüglich der Werkzeugscheibe in wiederholbarer, genau definierter Positionierung festgelegt ist.

Aus der EP 0 780 179 B1 ist eine Festlegevorrichtung der eingangs genannten Art bekannt. Als Festlegeelement weist diese Vorrichtung am Werkzeughalter einen vorspringenden Formkörper auf, und an der jeweiligen Werkzeugstation der Werkzeugscheibe ist als Festlegeelement eine Vertiefung vorgesehen, die, wenn die Anlagefläche des Werkzeughalters an der Anlagefläche der Werkzeugscheibe anliegt, den Formkörper des Werkzeughalters aufnimmt, wobei Formkörper und Vertiefung spielfrei ineinander greifen, um den Werkzeughalter an der Werkzeugscheibe zu positionieren. Um hierbei die für den Einsatz des Werkzeugrevolvers erforderliche Sollposition zu erreichen, sind die Festlegeelemente relativ zu Werkzeughalter und Werkzeugscheibe justierbar. Diesbezüglich wird bei der bekannten Vorrichtung so vorgegangen, dass das Festlegeelement an der jeweiligen Werkzeugstation der Werkzeugscheibe mittels eines Master-Werkzeughalters ausgerichtet und in so justierter Position mittels Schrauben fixiert wird. Für die entsprechende Justierung des Festlegeelementes des Werkzeughalters ist an der Werkzeugscheibe eine Master-Werkzeugstation mit vorjustiertem Festlegeelement vorgesehen. Bei an diese Master-Werkzeugstation angesetztem Werkzeughalter wird nunmehr auch das Festlegeelement des Werkzeughalters entsprechend justiert und ebenfalls durch Schrauben fixiert. Wegen der Notwendigkeit, Master-Komponenten vorzusehen und Justiervorgänge auszuführen, gestaltet sich der Betrieb von Werkzeugrevolvern, die mit der bekannten Festlegevorrichtung ausgerüstet sind, verhältnismäßig umständlich und aufwändig.

Die DE 20 2010 004 617 U1 und die DE 10 2009 033 805 A1 beschreiben jeweils eine gattungsgemäße Festlegevorrichtung zum lösbaren Festlegen mindestens einer Funktionskomponente, insbesondere in Form eines Werkzeughalters, an einer weiteren Funktionskomponente, insbesondere in Form einer Werkzeugscheibe, um mindestens eine Festlegeachse, wobei die beiden Funktionskomponenten jeweils eine Anlagefläche für die gegenseitige Anlage miteinander aufweisen und sowohl die eine als auch die weitere Funktionskomponente mindestens ein Festlegeelement aufweisen, wobei die eine Funktionskomponente zur Bildung der Festlegeelemente zwei Festlegekörper aufweist, die beidseits der Festlegeachse und im Abstand voneinander mit der zugehörigen Funktionskomponente lageunveränderlich verbunden sind, und dass jeder Festlegekörper eine zur Festlegeachse quer verlaufende Festlegefläche bildet, die beide von der gleichen Seite her an eine zugehörige Positionierfläche anlegbar sind, die sich als Festlegeelemente an der anderen Funktionskomponente im Abstand voneinander befinden, wobei die Festlegekörper durch jeweils einen Leistenkörper gebildet sind, die an einander gegenüberliegenden Seitenflächen einer Grundplatte des Werkzeughalters angebracht sind, wobei die Leistenkörper an der Grundplatte mittels einer Schraubverbindung befestigt sind. Während bei der Lösung nach der DE 10 2009 033 805 A1 für die Positionierung der Funktionskomponenten aneinander keine zusätzliche Justier- oder Positioniereinrichtung notwendig ist, weil die als Ausrichtteil auf den Werkzeughalter aufgesetzten leistenförmigen Festlegekörper aufgrund ihres jeweiligen Längsschlitzes mit ihren vorstehenden Festlegenocken selbstjustierend in die zugehörigen Ausnehmungen der Werkzeugscheibe mit ihren Schrägflächen eingreifen, ist für die Festlegevorrichtung nach der DE 20 2010 004 617 U1 ebenso wie bei dem Gegenstand nach der EP 0 780 179 B1 der Einsatz einer Justier- oder Positioniereinrichtung für das Aneinanderlegen der Funktionskomponenten zwingend notwendig. Im Rahmen der sich selbstjustierenden Leistenkörper sind aber bei der bekannten Lösung nach der DE 10 2009 033 805 A1 diese entsprechend von der Baulänge her groß dimensioniert und die jeweils einander benachbart gegenüberliegenden Festlegenocken eines Leistenkörpers übergreifen die jeweilige Anlagefläche auf der Werkzeugscheibe mit der der Werkzeughalter mit seiner Anlagefläche in entsprechende Anlage kommt, was relativ viel Bauraum einnimmt. Auch ist hierdurch die Handhabung beim Aneinanderlegen der Funktionskomponenten erschwert. Ein Festlegevorrichtung gemäß dem Oberbegriff des Anspruchs 1 ist aus DE 20 2010 004 617 U1 bekannt. Im Hinblick hierauf liegt der Erfindung die Aufgabe zugrunde, eine Festlegevorrichtung zur Verfügung zu stellen, die sich bei vergleichsweise geringerem baulichen Aufwand durch eine besonders einfache Handhabung im Betrieb auszeichnet.
Erfindungsgemäß ist diese Aufgabe durch eine Festlegevorrichtung gelöst, die die Merkmale des Patentanspruches 1 in seiner Gesamtheit aufweist.

Gemäß dem kennzeichnenden Teil des Anspruches 1 besteht eine wesentliche Besonderheit der Erfindung darin, dass die Schraubverbindung Formschlusselemente zur Bildung einer passgenauen Verbindung ohne Einsatz einer Justiereinrichtung enthält und dass jede Schraubverbindung zur Bildung des passgenauen Formschlusses zwischen Schraube und den zugehörigen Bohrungen in Leistenkörper und Grundplatte eine auf der Schraube passend sitzende Buchse aufweist, deren Außenumfang eine Passung mit den Bohrungen des Leistenkörpers und der Grundplatte bildet. Die so gestaltete Schraubverbindung gewährleistet die lageunveränderliche Fixierung des Leistenkörpers sowohl durch den am Außenumfang der Buchse gebildeten Formschluss zwischen Grundplatte und Leistenkörper als auch durch den Ausschluss jeglichen Schraubenspieles durch die passgenau auf der Schraube sitzende Buchse.

Zur Bildung der Festlegelemente sind an der einen Funktionskomponente zwei Festlegekörper vorgesehen, die im Abstand voneinander beidseits der Festlegeachse lageunveränderlich mit der zugehörigen Funktionskomponente verbunden sind, wobei jeder Festlegekörper eine zur Festlegeachse quer verlaufende Festlegefläche bildet, die beide von der gleichen Seite her an eine zugehörige Positionierfläche anlegbar sind, die sich als Festlegeelemente an der anderen Funktionskomponente im Abstand voneinander befinden. Durch die lageunveränderliche Verbindung der die Festlegefläche bildenden Festlegekörper mit der zugeordneten Funktionskomponente sind für den Einsatz keine Justiervorgänge der Festlegeelemente durchzuführen, was die Handhabung entsprechend vereinfacht. Im Vergleich mit den beim Stand der Technik vorgesehenen Festlegeelementen in Form ineinandergreifender Formschlusselemente zeichnet sich die Erfindung durch eine vereinfachte Bauweise aus, weil die Festlegeflächen der beiden Festlegekörper von der gleichen Seite an die zugehörige Positionierfläche der anderen Funktionskomponente anlegbar sind und daher keine spielfrei ineinandergreifenden Formschlusselemente auszubilden sind.

In besonders vorteilhafter Weise kann die jeweilige Festlegefläche an einem mit dem jeweiligen Festlegekörper einstückigen Festlegenocken gebildet sein, wobei die Festlegefläche aus der Anlagefläche vorspringt und eine quer zur Festlegeachse verlaufende Festlegeebene definiert.

Mit besonderem Vorteil kann die Anordnung hierbei so getroffen sein, dass die Festlegeelemente der anderen Funktionskomponenten vorzugsweise der Werkzeugscheibe, zur Bildung der jeweiligen Positionierfläche für jede Festlegefläche in ihrer Anlagefläche je eine Vertiefung aufweisen, die auf einer Seite durch ein die Positionierfläche bildendes Wandteil begrenzt sind. Somit sind sämtliche Komponenten der Festlegevorrichtung innerhalb des Umrisses der Auflagefläche, beispielsweise der Werkzeugscheibe, gelegen, so dass an letzterer keine seitlichen, axial überstehenden Teile der Festlegevorrichtung vorhanden sind.

In besonders vorteilhafter Weise können sich die Leistenkörper über den Großteil der Länge der betreffenden Seitenfläche der Grundplatte erstrecken, wobei an jedem Endbereich der Leistenkörper eine Schraubverbindung vorgesehen ist.

Nachstehend ist die Erfindung anhand eines in der Zeichnung dargestellten Ausführungsbeispieles im Einzelnen erläutert. Es zeigen:
- Fig. 1: eine perspektivisch, abgebrochen und auseinandergezogen gezeichnete Schrägansicht eines Umfangsabschnitts der Werkzeugscheibe eines Werkzeugrevolvers, wobei ein Werkzeughalter in von der Aufnahme an der Werkzeugscheibe abgehobener Stellung dargestellt ist;
- Fig. 2 und 3: abgebrochen gezeichnete Teildraufsichten einer Werkzeugstation der Werkzeugscheibe, wobei in einer innerhalb der Werkzeugscheibe teilweise sichtbarer Schnittdarstellung der verzahnte Schaft eines Werkzeughalters vor dem Spannzustand des Schaftes bzw. im Spannzustand des Schaftes gezeigt sind;
- Fig. 4: eine abgebrochene perspektivische Schrägansicht der Werkzeugscheibe im Bereich der Anlagefläche einer Werkzeugstation; und
- Fig. 5: einen vergrößert gezeichneten Teillängsschnitt des Bereiches einer Schraubverbindung zwischen Werkzeughalter und einem Festlegekörper gemäß dem zu beschreibenden Ausführungsbeispiel der Festlegevorrichtung.

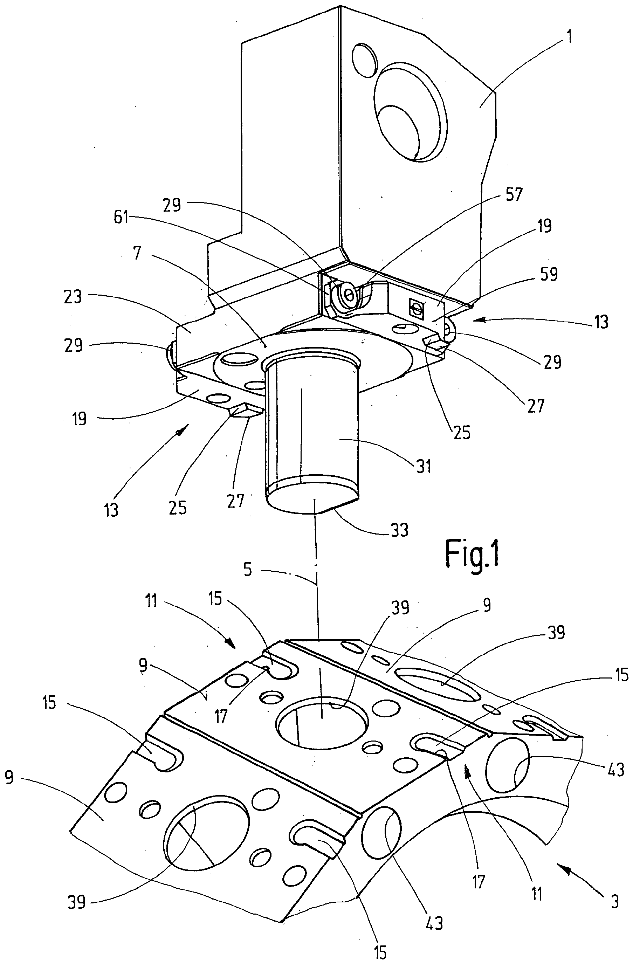

Die Fig. 1 zeigt in der Art einer Explosionsdarstellung ein Ausführungsbeispiel der erfindungsgemäßen Festlegevorrichtung zum lösbaren Festlegen mindestens einer Funktionskomponente, vorliegend in Form eines Werkzeughalters 1, an einer weiteren Funktionskomponente, hier in Form einer Werkzeugscheibe 3, um mindestens eine Ausrichtachse 5, die in Blickrichtung auf die Fig. 1 gesehen sich in einer vertikalen Ausrichtung erstreckt. Der Werkzeughalter 1 sowie die Werkzeugscheibe 3 weisen auf ihren einander benachbart zugewandten Seiten jeweils eine Anlagefläche 7 bzw. 9 auf, die im festgelegten Zustand des Werkzeughalters 1 aneinander anliegen.

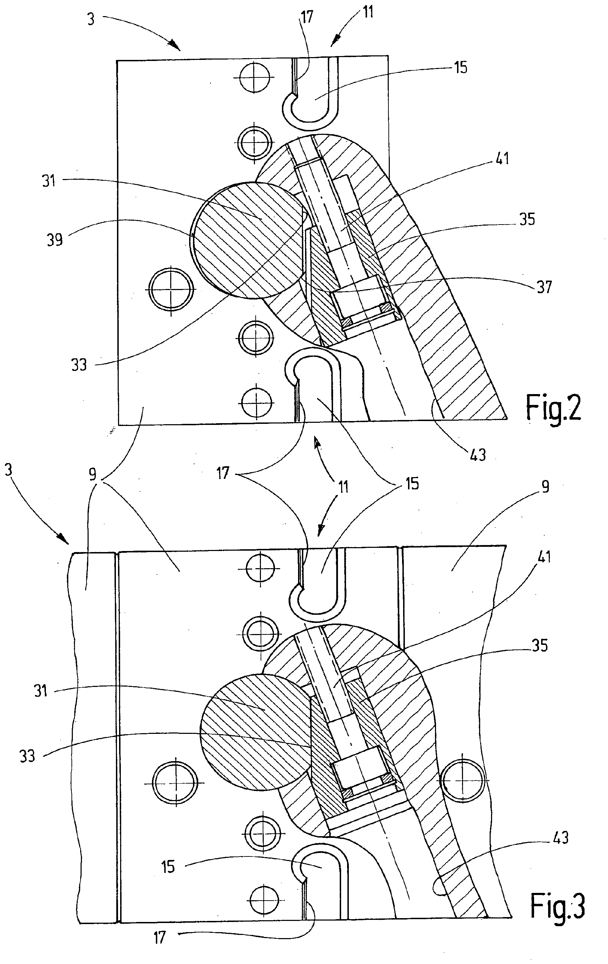

Sowohl an der Anlagefläche 9 der Werkzeugscheibe 3 als auch an der Anlagefläche 7 des Werkzeughalters 1 befinden sich Festlegeelemente 11 bzw. 13, die, in paarweise Wirkzusammenhang miteinander gebracht, die Festlegung des Werkzeughalters 1 an der Werkzeugscheibe 3 in einer relativen Positionierung bezüglich der Ausrichtachse 5 gewährleisten. Die Festlegeelemente 11 der Werkzeugscheibe 3 weisen in der Anlagefläche 9 zwei Vertiefungen 15 auf, die sich von beiden einander gegenüberliegenden Seitenrändern der Werkzeugscheibe 3 her in gleichen Abständen von einem an die nächstfolgende Anlagefläche 9 angrenzenden Rand der jeweiligen Anlagefläche 9 befinden. Die Vertiefungen 15 haben, wie am deutlichsten aus Fig. 2, 3 und 4 ersichtlich ist, die Form einer am Eingang von parallelen Wänden begrenzten Nut, die sich am inneren Ende bogenförmig erweitert. Dabei bildet die Vertiefung 15 mit dem in Fig. 2 bis 4 linksseitig gelegenen Wandteil eine Positionierfläche 17 in einer quer zur Ausrichtachse 5 verlaufenden Festlegeebene.

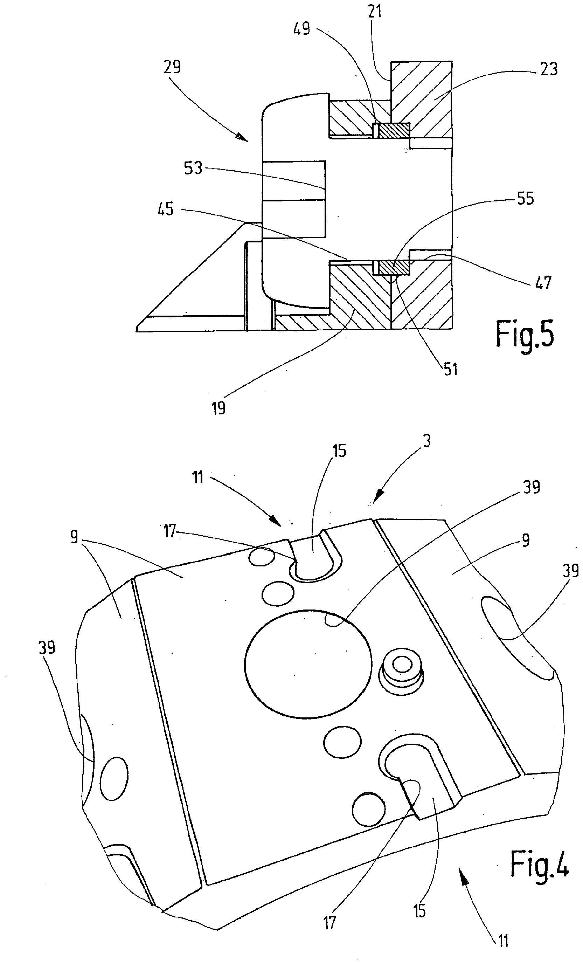

Die Festlegeelemente 13 am Werkzeughalter 1 weisen zwei Festlegekörper 19 auf, die an einander gegenüberliegenden Seitenflächen 21 (Fig. 5) der die Anlagefläche 7 bildenden, rechteckförmigen Grundplatte 23 des Werkzeughalters 1 angebracht sind. Wie später näher erläutert, sind die Festlegekörper 19 am Werkzeughalter 1 lageunveränderlich, also nicht justierbar, angebracht. Die Festlegekörper 19 sind an denjenigen Seitenflächen 21 der Grundplatte 23 vorgesehen, die den Seitenrändern der Werkzeugscheibe 3 entsprechen, an denen die Vertiefungen 15 münden. Entsprechend dieser Lagebeziehung befinden sich an dem Festlegekörper 19 die für die Zusammenwirkung mit den Positionierflächen 17 der Werkzeugscheibe 3 vorgesehenen Festlegeflächen 25, die an den Festlegekörpern 19 jeweils in der Nähe eines Endes der Seitenfläche 21 der Grundplatte 23 gelegen sind. Dabei sind die Festlegeflächen 25 durch geradlinige Seitenflächen von mit den Festlegekörpern 19 einstückigen, aus der Ebene der Anlagefläche 7 vorstehenden Festlegenocken 27 gebildet. Wie aus Fig. 1 zu entnehmen, haben die Festlegekörper 19 die Form von Leistenkörpern, die sich an der jeweiligen Seitenfläche 21 der Grundplatte 23 im Wesentlichen über deren gesamte Länge erstrecken. An beiden abgestuften Endbereichen der Körper 19 ist für eine lageunveränderliche Befestigung an der Grundplatte 21 des Werkzeughalters 1 jeweils eine Schraubverbindung 29 vorgesehen, deren Einzelheiten in Fig. 5 näher dargestellt sind. Ferner kann vorgesehen sein die genannten Seitenflächen auch ballig auszubilden.

Wie die Fig. 1 bis 3 zeigen, weist der Werkzeughalter 1 in der Mitte der Anlagefläche 7 einen Zapfen 31 als Halteteil auf, der auf der in Fig. 1 dem Betrachter nicht zugewandten Seite, d.h. auf der in Fig. 2 und 3 nach rechts weisenden Seite, über eine Verzahnungsfläche 33 verfügt, in die ein korrespondierendes Klemmstück 35 mit seiner Verzahnung 37 (Fig. 2) eingreifen kann, wenn der Zapfen 31 in eine in der Anlagefläche 9 zentral gelegene Aufnahmebohrung 39 der Werkzeugscheibe 3 eingesteckt ist. Wie Fig. 2 und 3 zeigen, ist das Klemmstück 35 mittels einer Spannschraube 41 mit der Verzahnung 37 verspannbar, um den Werkzeughalter 1 an der Werkzeugscheibe 3 anzuziehen. Die Fig. 3 zeigt diesen Zustand. Das Klemmstück 35 wird über eine zugeordnete, in der Seitenfläche der Werkzeugscheibe 3 ausgebildete Zuführbohrung 43 zugeführt und entsprechend verschraubt. Der dahingehende Verriegelungseingriff ist üblich und beispielsweise Gegenstand der DIN 69880. Mit Anziehen der Spannschraube 41 wird über den Zapfen 31 eine Anzugskraft auf den Werkzeughalter 1 in Richtung der Werkzeugscheibe 3 ausgeübt, so dass unter hohem Anpressdruck die beiden korrespondierenden Anlageflächen 7, 9 miteinander in Anlage kommen, unter Einbezug der paarweise zusammenwirkenden Festlege- und Positionierflächen 17, 19 für die Positionierung des Werkzeughalters 1 relativ zur Werkzeugscheibe 3.

Wie bereits erwähnt, sind die Festlegekörper 19 mit der daran einstückig gebildeten Festlegefläche 25 lageunveränderlich mit dem Werkzeughalter 1 verbunden. Dies erfolgt mittels der in Fig. 5 näher dargestellten Schraubverbindungen 29, die Formschlusselemente enthalten, mittels deren eine passgenaue Verbindung, frei von Schraubenspiel, gebildet ist. Zu diesem Zweck weisen sowohl die Bohrung 45 im Festlegekörper 19 als auch die Bohrung 47 in der Grundplatte 23 des Werkzeughalters 1 an den einander zugewandten Enden jeweils eine den Bohrungsdurchmesser erweiternde Stufe 49 bzw. 51 auf. Auf der die Bohrungen 45 und 47 durchgreifenden Befestigungsschraube 53 ist, auf der Schraube 53 passgenau sitzend, eine Passbuchse 55 angeordnet, deren Außenumfang passend in den durch die Stufen 49, 51 gebildeten Erweiterungen der Bohrungen 45, 47 sitzt.

Somit ergibt sich beim Festziehen der Schraube 53 eine formschlüssige Verbindung zwischen Festlegekörper 19 und Grundplatte 23, also eine Verbindung zwischen Festlegefläche 25 und Werkzeughalter 1 die nicht justierbar ist. Für die Inbetriebnahme der Festlegevorrichtung wird daher so vorgegangen, dass die Leistenkörper 19 mit zunächst unbearbeiteten Festlegeflächen 25 am Werkzeughalter 1 montiert und mittels der passgenauen Buchsen 25 zentriert werden. Nach Festziehen der Schrauben 53 sind daher die Festlegekörper 19 nicht mehr justierbar. Anschließend werden nach Maßgabe der hochgenau definierten Position der Positionierflächen 17 an der Werkzeugscheibe 3 die beiden Festlegeflächen 25 der Festlegekörper 19 fertig bearbeitet. Nach hoch genau durchgeführter Fertigbearbeitung erfolgt die Festlegung in vorgegebener Position, ohne dass Justiermaßnahmen durchgeführt werden müssten.

Bei einer bevorzugten Ausführungsform der erfindungsgemäßen Lösung ist vorgesehen, das vergleichbar zu der nachveröffentlichten DE 10 2009 033 805.5 der jeweilige Festlegekörper 19 geschlitzt ist, gemäß den Darstellungen nach den Fig. 4, 4a und 4b der nachveröffentlichten Schrift. Der dahingehende Längsschlitz 57 unterteilt den Leistenkörper 19 in zwei miteinander am Boden verbundene Segmente mit den Bezugszeichen 59 und 61. Der leistenförmige Festlegekörper 19 ist also unter Bildung von zwei miteinander verbundenen Leistenkörpern 59, 61 geschlitzt ausgeführt, wobei der eine Leistenkörper 59, der die Festlegefläche 25 in Verbindung mit den Nocken 27 aufweist, relativ zu dem anderen Leistenkörper 61, der mit dem Werkzeughalter 1 verbunden ist, in gewissem Maße bewegbar ist und zwar in schlitzverengender Weise, so dass der Spalt 57 an seinem freien oberen Ende sich vom freien Spaltquerschnitt oder Spaltmaß her verringert.

Der Festlegekörper 19 ist also in der Art eines quaderförmigen Bauteils konzipiert, das von der Oberseite her von einer Nut unter Bildung des Eingriffsschlitzes 57 durchgriffen ist, wobei der Schlitz nach unten hin in einer Art Brücke als Verbindungssteg zwischen den beiden Leistenkörpern 59 und 61 ausmündet. Dergestalt ist über die genannte Brücke eine Art Biegegelenkstelle verwirklicht, über die der Leistenkörper 59 unter elastischer Auslenkung um diese Biegestelle auf den Leistenkörper 61 zustellbar ist. Diese Schwenkbewegung des Leistenkörpers 59 findet nur statt, sofern der Werkzeughalter 1 in entsprechend montiertem Zustand sich auf der Werkzeugscheibe 3 befindet. Auf diese Art und Weise kommt die jeweilige Festlegefläche 25 gegebenenfalls nur partiell in Anlage mit der zugeordneten Positionierfläche 17 an der Werkzeugscheibe 3.

## Patentansprüche

1. Festlegevorrichtung zum lösbaren Festlegen mindestens einer Funktionskomponente, insbesondere in Form eines Werkzeughalters (1), an einer weiteren Funktionskomponente, insbesondere in Form einer Werkzeugscheibe (3), um mindestens eine Festlegeachse (5), wobei die beiden Funktionskomponenten jeweils eine Anlagefläche (7, 9) für die gegenseitige Anlage miteinander aufweisen und sowohl die eine als auch die weitere Funktionskomponente mindestens ein Festlegeelement (11, 13) aufweisen, wobei die eine Funktionskomponente zur Bildung der Festlegeelemente (13) zwei Festlegekörper (19) aufweist, die beidseits der Festlegeachse (5) und im Abstand voneinander mit der zugehörigen Funktionskomponente lageunveränderlich verbunden sind, und dass jeder Festlegekörper (19) eine zur Festlegeachse (5) quer verlaufende Festlegefläche (25) bildet, die beide von der gleichen Seite her an eine zugehörige Positionierfläche (17) anlegbar sind, die sich als Festlegeelemente (11) an der anderen Funktionskomponente im Abstand voneinander befinden, wobei die Festlegekörper (19) durch jeweils einen Leistenkörper gebildet sind, die an einander gegenüberliegenden Seitenflächen (21) einer Grundplatte (23) des Werkzeughalters (1) angebracht sind, wobei die Leistenkörper (19) an der Grundplatte (23) mittels einer Schraubverbindung (29) befestigt sind, **dadurch gekennzeichnet, dass** die Schraubverbindung (29) Formschlusselemente zur Bildung einer passgenauen Verbindung ohne Einsatz einer Justiereinrichtung enthält und dass jede Schraubverbindung (29) zur Bildung des passgenauen Formschlusses zwischen Schraube (53) und den zugehörigen Bohrungen (45, 47) in Leistenkörper (19) und Grundplatte (23) eine auf der Schraube (53) passend sitzende Buchse (55) aufweist, deren Außenumfang eine Passung mit den Bohrungen (45, 47) des Leistenkörpers (19) und der Grundplatte (23) bildet.

2. Festlegevorrichtung nach Anspruch 1, **dadurch gekennzeichnet, dass** die Festlegekörper (19) mit der betreffenden Funktionskomponente, vorzugsweise dem Werkzeughalter (1), mittels mindestens eines Formschlusselementes lageunveränderlich verbunden sind.

3. Festlegevorrichtung nach Anspruch 1 oder 2, **dadurch gekennzeichnet, dass** die jeweilige Festlegefläche (25) an einem mit dem jeweiligen Festlegekörper (19) einstückigen Festlegenocken (27) gebildet ist, aus der Anlagefläche (7) vorspringt und eine quer zur Festlegeachse (5) verlaufende Festlegeebene definiert.

4. Festlegevorrichtung nach einem der vorstehenden Ansprüche, **dadurch gekennzeichnet, dass** die Festlegeelemente (11) der anderen Funktionskomponente, vorzugsweise der Werkzeugscheibe (3), zur Bildung der jeweiligen Positionierfläche (17) für jede Festlegefläche (25) in ihrer Anlagefläche (9) je eine Vertiefung (15) aufweisen, die auf einer Seite durch ein die Positionierfläche (17) bildendes Wandteil begrenzt sind.

5. Festlegevorrichtung nach einem der vorstehenden Ansprüche, **dadurch gekennzeichnet, dass** die Grundplatte (23) rechteckförmig ist.

6. Festlegevorrichtung nach einem der vorstehenden Ansprüche, **dadurch gekennzeichnet, dass** die Leistenkörper (19) sich über den Großteil der Länge der betreffenden Seitenfläche (21) der Grundplatte (23) erstrecken und dass an jedem Endbereich der Leistenkörper (19) eine Schraubverbindung (29) vorgesehen ist.

7. Festlegevorrichtung nach Anspruch 3, **dadurch gekennzeichnet, dass** die Festlegenocken (27) in der Nähe jeweils eines Endbereiches der Leistenkörper (19) gelegen sind.

## Claims

1. A fixing apparatus for releasably fixing at least one functional component, in particular in the form of a tool holder (1), on a further functional component, in particular in the form of a tool disk (3), about at least one fixing axis (5), wherein the two functional components each have a bearing surface (7, 9) for mutual contact with one another, and both the one functional component and also the further functional component have at least one fixing element (11, 13), wherein, to form the fixing elements (13), the one functional component has two fixing bodies (19) in fixed-position connection with the associated functional component on both sides of the fixing axis (5) and spaced apart, and that each fixing body (19) forms a fixing surface (25) extending transversally to the fixing axis (5), which both from the same side may be placed against an associated positioning surface (17), which as fixing elements (11) are located spaced apart on the other functional component, wherein each of the fixing bodies (19) is formed by a strip body attached to opposite side faces (21) of a base plate (23) of the tool holder (1), wherein the strip bodies (19) are fixed to the base plate (23) by means of a threaded connection (29), **characterised in that** the threaded connection (29) contains form locking elements for forming a precision-fit connection without the use of an adjusting device, and that, for forming the precision-fit form locking between screw (53) and the associated holes (45, 47) in strip body (19) and base plate (23), each threaded connection (29) has a bushing (55) snugly seated on the screw (53), the outer circumference of which bushing forms a match with the holes (45, 47) of the strip body (19) and the base plate (23).

2. The fixing apparatus according to claim 1, **characterised in that** the fixing bodies (19) are in fixed-position connection with the relevant functional component, preferably the tool holder (1), by means of at least one form locking element.

3. The fixing apparatus according to claim 1 or 2, **characterised in that** the respective fixing surface (25) is formed on a fixing cam (27) integrated in the respective fixing body (19), protrudes from the bearing surface (7), and defines a fixing plane extending transversely to the fixing axis (5).

4. The fixing apparatus according to one of the preceding claims, **characterised in that** the fixing elements (11) of the other functional component, preferably of the tool disk (3), each have a recess (15) in their bearing surface (9) for forming the respective positioning surface (17) for each fixing surface (25), which recess is bounded on one side by a wall portion forming the positioning surface (17).

5. The fixing apparatus according to one of the preceding claims, **characterised in that** the base plate (23) is rectangular.

6. The fixing apparatus according to one of the preceding claims, **characterised in that** the strip bodies (19) extend over the majority of the length of the respective side face (21) of the base plate (23) and that a threaded connection (29) is provided at each end portion of the strip bodies (19).

7. The fixing apparatus according to claim 3, **characterised in that** the fixing cams (27) are each located in the vicinity of an end portion of the strip bodies (19).

## Revendications

1. Système de fixation pour fixer de manière détachable au moins un composant fonctionnel, notamment sous la forme d'un porte-outil (1), à un autre composant fonctionnel, notamment sous la forme d'un anneau (3) à outil, autour d'au moins un axe (5) de fixation, les deux composants fonctionnels ayant chacun une surface (7, 9) d'application pour l'application mutuelle entre eux et, tant l'un que l'autre composant fonctionnel ont au moins un élément (11, 13) de fixation, dans lequel le un composant fonctionnel a, pour la fixation de l'élément (13) de fixation, deux pièces (19) de fixation, qui, de part et d'autre de l'axe (5) de fixation à distance l'une de l'autre, sont assemblées sans possibilité de modification de position au composant fonctionnel associé et en ce que chaque pièce (19) de fixation forme une surface (25) de fixation s'étendant transversalement à l'axe (5) de fixation, lesquelles toutes deux peuvent être appliquées, par le même côté, à une surface (17) de mise en position associée, qui se trouve, comme éléments (11) de fixation, sur l'autre composant fonctionnel à distance l'une de l'autre, les pièces (19) de fixation étant formées chacune d'une pièce en barrette, qui est mise sur des surfaces (21) latérales opposées l'une à l'autre d'une plaque (23) de base du porte-outil (1), les pièces (19) en barrette étant fixées à la plaque (23) de base au moyen d'un vissage (29), **caractérisé en ce que** le vissage (29) comporte des éléments à complémentarité de forme pour former une liaison à repérage exact, sans utilisation d'un dispositif d'ajustement, et **en ce que** chaque vissage (29) a, pour former la complémentarité de forme à repérage exact, entre la vis (53) et les trous (45, 47) associés, dans la pièce (19) en barrette et la plaque (23) de base, une douille (55), qui est assise de manière adaptée sur la vis (53) et dont le pourtour extérieur forme une adaptation avec les trous (45, 47) de la pièce (19) en barrette et de la plaque (23) de base.

2. Système de fixation suivant la revendication 1, **caractérisé en ce que** les pièces (19) de fixation sont assemblées sans possibilité de changer de position au composant fonctionnel concerné, de préférence au porte-outil (1), au moyen d'au moins un élément à complémentarité de forme.

3. Système de fixation suivant la revendication 1 ou 2, **caractérisé en ce que** la surface (25) de fixation respective est formée sur un ergot (27) de fixation d'une seule pièce avec la pièce (19) de fixation respective, dépasse de la surface (7) d'application et définit un plan de fixation s'étendant transversalement à l'axe (5) de fixation.

4. Système de fixation suivant l'une des revendications précédentes, **caractérisé en ce que** les éléments (11) de fixation de l'autre composant fonctionnel, de préférence de l'anneau (3) à outil, ont, pour former la surface (17) de mise en position respective, pour chaque surface (25) de fixation dans sa surface (9) d'application, respectivement une cavité (15), qui est délimitée d'un côté par une partie de paroi formant la surface (17) de mise en position.

5. Système de fixation suivant l'une des revendications précédentes, **caractérisé en ce que** la plaque (23) de base est rectangulaire.

6. Système de fixation suivant l'une des revendications précédentes, **caractérisé en ce que** la pièce (19) en barrette s'étend sur la plus grande partie de la longueur des surfaces (21) latérales concernées de la plaque (23) de base et **en ce qu'**il est prévu un vissage (29) à chaque partie d'extrémité de la pièce (19) en barrette.

7. Système de fixation suivant la revendication 3, **caractérisé en ce que** les ergots (27) de fixation sont mis près d'une région d'extrémité des pièces (19) en barrette.
